# EUROPEAN PATENT APPLICATION

(11) **EP 0 541 307 A1**
(43) Date of publication of application: **12.05.1993**
(21) Application number: 92309981.6
(22) Date of filing: 30.10.1992
(51) Int. Cl.: F15B 13/04, F16K 27/04

(54) **Valve**

(30) Priority: 05.11.1991 GB 9123416
(71) Applicant: Norgren Martonair Limited, Lichfield Staffordshire, WS13 6SB (GB)
(72) Inventor: Sherrington, Jeffrey William, Lichfield, Staffordshire WS14 9XN (GB)
(74) Representative: Lane, Michael John

(57) **Abstract**

A spool valve body, especially suitable for use in a miniature spool valve, comprises a metallic tubular member (20) which has been internally expanded to form a series of spaced, radially outwardly projecting annular wall portions (30', 31', 32', 33', 34') each of which has a radial port (46) formed in it communicating with the bore of the tubular member (20). The tubular member (20) may be embedded in a block (38) of plastics material, the block (38) being formed with tube connecting ports (39, 40) in register with the radial ports (46) formed in the tubular member (20).

## Description

This invention relates to valves and has particular reference to spool valves.

Spool valves are a well known form of valve in which there is provided a body having an axial cylindrical bore therethrough. A series of radial ports are drilled through the body into the bore at positions along the length of the bore.

A piston is reciprocal within the bore and is provided with a series of rings or lands provided with circumferential seals which engage the bore wall at spaced positions along its length. The arrangement of the lands and the location of the ports is such that the ports may be connected or separated one from another in a predetermined way depending upon the position of the piston.

In a typical five port spool valve, three ports are arranged on one side of the valve body and two ports are arranged on the other side of the valve body. Typically, the central port of the three ports would be connected to a compressed air or hydraulic supply and the other two would be exhaust ports. On the other side, one of the pair of ports would be connected to one side of a piston member, for example of a cylinder, controlled by the valve and the other port would be connected to the opposite side of the piston member. In one position of the piston within the valve body, the central one of the three ports is connected to one of the two ports on the other side with the other port being connected to one of the exhaust ports. Movement of the piston to a second position within the valve body causes the central one of the three ports to be connected to the other of said two ports, the said one port being connected to the other exhaust port.

Such well known spool valves are used in numerous applications, particularly in pneumatic or hydraulic control and power systems. Typically, the valve bodies are made of metal and are machined, eg drilled, broached, reamed and tapped, to form the desired design of body. In particular, in order to prevent undue wear of the circumferential seals on the piston, it is customary to radius the radial ports at their transition with the bore in the valve body. The extensive machining operations required to manufacture such metal valve bodies adds cost to a spool valve and where the valve bodies are small the need to operate on a small scale further increases the cost of the product. Additionally, the machining of the valve body results in waste material which has to be recycled, but such material is of little value in the scrap condition compared to its new value and again this adds to the cost of the valve.

The present invention seeks to replace the conventional valve body of a spool valve with a body which may be made more economically and which leads itself in particular to use in miniature spool valves.

According to the present invention, therefore, there is provided a multi-port spool valve body having a generally cylindrical bore extending axially therethrough for slidably receiving a piston, and further having a plurality of radial ports communicating with said bore, characterised in that said body comprises a metallic tubular member deformed to provide a plurality of spaced, radially projecting, annularwall portions there being a radial port formed in each of the said annular wall portions of the tubular member.

Preferably, the tubular member is embedded in a block of plastics or other mouldable or castable material, said block being formed with respective tube connecting ports in register with the radial ports formed in the tubular member.

The present invention also provides a spool valve including a body as defined above.

The tubular member is preferably deformed by internally expanding it whilst in a former. In any event, the transition between the main bore of the tubular member and the ported radially projecting annular portions will automatically be radiussed by virtue of the deformation process. Additional machining, as is required with conventional spool valve bodies in order to radius such transition, is therefore unnecessary.

The present invention also provides a method of manufacturing a body for a multiport spool valve which includes the steps of
1. taking a metallic tubular member
2. surrounding the exterior of the tubular member with a plurality of axially spaced annular collars adapted to restrain expansion of the tube at the location of the collars but to permit expansion of the tubular member in a radially outward direction between the collars
3. filling the tubular member with a fluid under a pressure sufficiently high to expand the tubular member radially between the collars
4. releasing the pressure, and
5. forming radial ports for fluid in the expanded portions of the tubular member.

The annular collars may be split so as to be removable from the tube in the post-expanded condition.

The annular collars may be separate collars or may be individual collars joined together or may be machined or formed from and in an integral block.

Threaded or other tube connecting members may be welded or otherwise connected to the expanded portions of the tubular member in register with the radial ports therein, in order to provide a finished valve body.

The expanded tubular member, with tube connecting members connected thereto as aforesaid, may be embedded in a block of plastics or other material.

Alternatively, the expanded tubular member may be embedded in a block of plastics or other material with tube connecting ports for the valve being formed during moulding or casting of the block. The connecting ports may be in the form of metal inserts having an internal screw thread, the radial ports in the tubular member being drilled or pierced through, via the inserts, after the moulding operation. Alternatively, the connecting ports may be formed by threading the plastics or other material of the block. In the latter case, the threaded ports may be surrounded by a metal sleeve to provide enhanced strength to the threads.

The tubular member may have an internal bore of a size accurately determined such that no further processing is needed after expansion. Alternatively, the tubular member may be sized internally by a plunging operation in which the plunger is forced through the tubular member to accurately determine its internal dimensions. In a yet further alternative the tubular member may be reamed internally after forming.

The tubular member may be formed of, for example, brass or stainless steel. The stainless steel may be an annealed stainless steel. Preferably the tubular member is expanded by filling it with a liquid which is compressed hydraulically. The liquid may typically be an oil and may be pressurised to a pressure in the region of 10,000 pounds per square inch to 15,000 pounds per square inch (600-1,000 bar).

The plastics material of the block, if present, may be a filled nylon material or may be a so-called engineering plastics material such as acetal copolymer. Alternatively, the block could comprise a metal casting.

The present invention also provides a spool valve body manufactured in accordance with the process defined above.

By way of example, the present invention will now be described in more detail with reference to the accompanying drawings of which
FIGURE 1 is a cut-away perspective view of a conventional spool valve,
FIGURE 2 is a sectional schematic view of the valve shown in Fig 1,
FIGURE 3 is a sectional schematic view of tooling that may be used to deform the tubular member in the method of the invention,
FIGURE 4 is a schematic perspective view of one form of valve body of the invention,
FIGURE 5 is a sectional view along the lines of arrows V-V of Fig 4, and
FIGURE 6 is an enlarged sectional view of an alternative form of connecting port in a valve body of the invention.

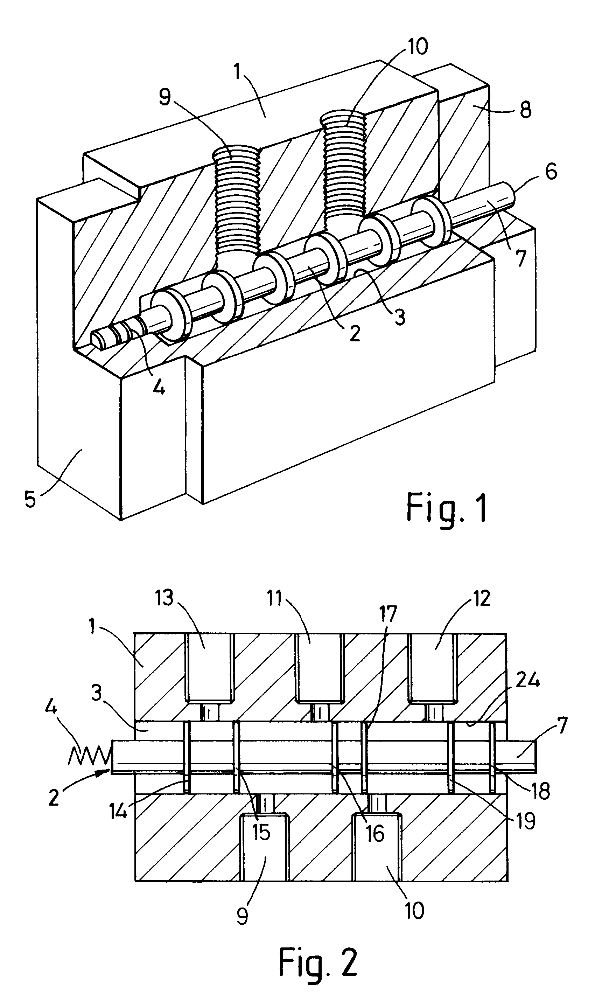

Figures 1 and 2 show respectively a cut-away perspective view and a schematic sectional side elevation of a typical conventional five port spool valve. The valve comprises a body 1 and a piston 2 reciprocable within a bore 3 in the body. A spring 4 located in an end block 5 biases the piston 2 to the right. At the other end the piston may be manually operated by depression of the end 6 of the rod 7 or a mechanism (not shown) may be mounted in the end block 8 to permit pneumatic, electric, hydraulic or other automatic operation of the piston 2. A pair of ports 9, 10 are formed in one side of the valve body 1 and three further ports 11, 12, 13 are formed in the opposite side of the body 1. The valve body 1 is typically made of a metal such as zinc, aluminium or stainless steel and the bore 3 and ports 9, 10 are machined in the body on conventional machinery.

The piston rod 7 has secured to it a series of lands 14, 15, 16, 17, 18 and 19. The lands 14-19, each of which may be provided with a circumferential seal, such as an O-ring (not shown), completely block the bore 3 of the valve body 1. When the piston 2 is in the position shown in Figure 2 it can be seen that the port 11 is connected to port 9 and the port 12 is connected to port 10. The port 13 is blocked. Typically port 11 would be connected to a source of pressurised air and ports 12 and 13 would be connected to exhaust. One inlet of a double acting pneumatic cylinder (not shown) would be connected to the port 9 and the other inlet of the pneumatic cylinder would be connected to the port 10.

With the spool valve shown in the position in Figure 2 pressurised air would therefore pass from port 11 through port 9 to one end of the pneumatic cylinder resulting in movement of the pneumatic cylinder's piston in response to the pressure. Air from the other end could then exhaust through port 10 and exhaust port 12 via the bore 3 of the valve.

In order to reverse the direction of operation of the piston within the cylinder, the piston rod 7 is moved to the left resulting in the land 16 moving to the left so as to seal off the port 11 from port 9 whilst the movement of land 15 will open the connection between exhaust port 13 and port 9. Similarly land 18 will seal the connection between ports 12 and 10 while the movement to the left of land 17 will open the connection between ports 11 and 10 thus feeding compressed air to the other inlet of the pneumatic cylinder. During movement of the piston rod 17, the peripheral sealing suraces of the lands 14-19, for example the O-rings, traverse the inner ends of ports 9-13 where they meet the bore 3. Accordingly the transition between each port and the bore is conventionally radiussed in order to avoid scuffing or other damage to the sealing surfaces.

Such spool valves, in this case a five port spool valve, are well known in the art. As has been set out above, the bodies are conventionally manufactured from metal by drilling, tapping, reaming and honing operations.

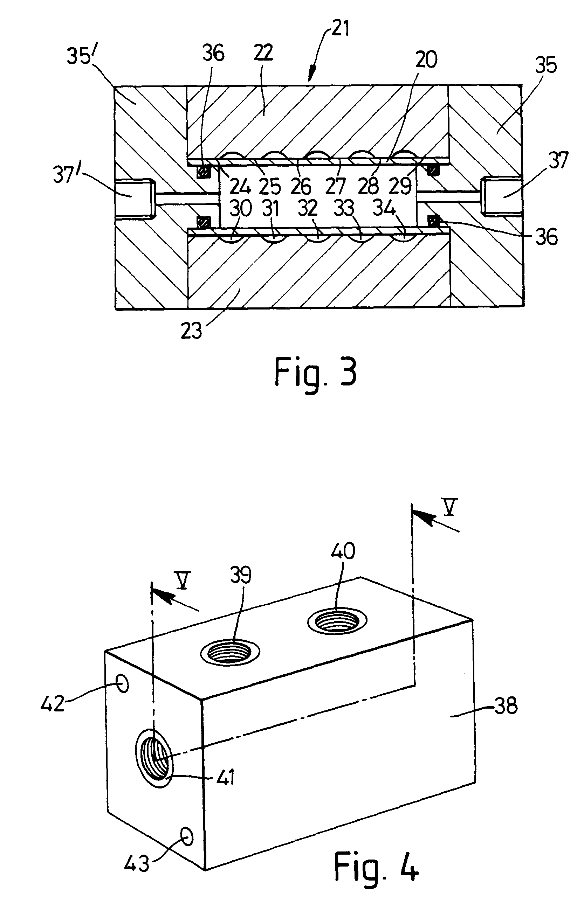

The present invention, which is more specifically described with reference to Figures 3-6, produces a spool valve body by a totally different method whereby the aforesaid transition is made inherently radiussed.

Referring to Fig 3, a tube 20 of annealed stainless steel or brass having an accurately determined internal diameter is mounted in a split die 21 comprising a pair of die members 22, 23 which together define a generally cylindrical bore having a series of axially spaced annular collars 24, 25, 26, 27, 28 and 29 that support the tube 20. Between the annular collars 24-29 are rounded annular grooves 30-34 into which the tube 20 may be deformed, as described below, in a controlled manner.

The ends of the split die 21 are provided with respective end caps 35, 35' which are sealed internally of the tube 20 by means of respective 'O' rings 36, 36'. A connection is made to an external hydraulic circuit by means of threaded bores 37, 37'. Oil is then pumped into the tube 20 which is expanded at a pressure of up to 1,000 bar (typically 10,000 to 15,000 psi) to cause the tube to expand into the regions 30-34 between the annular collars 24-29.

Once expansion has been completed, the hydraulic pressure is removed, the fluid drained, the end caps 35, 35' removed and the die 21 split to gain access to the expanded tube 20.

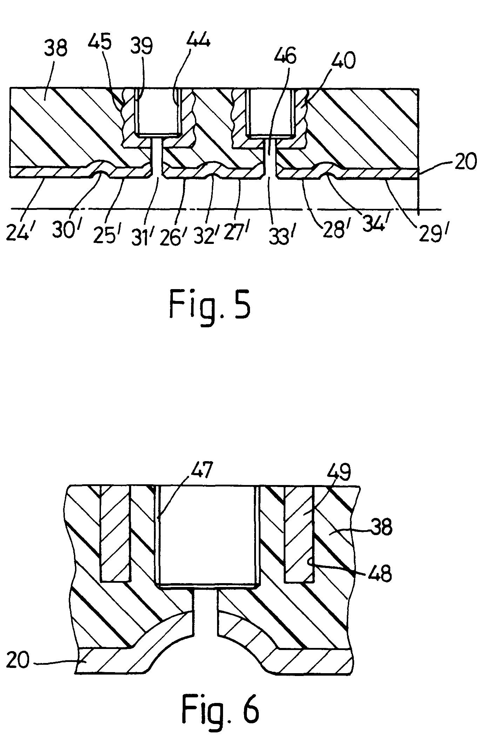

Referring to Fig 5, the expanded tube 20 thus has a series of portions 24'-29' of accurately determined internal diameters corresponding to the positions of the collars 24-29 with expanded annular portions 30'-34' between them corresponding to the positions of the grooves 30-34, the transition between the portions 24'-29' and 30'-34' being smoothly curved, ie radiussed.

If the internal dimensions are not exactly as required, a plunger of a known dimension may be thrust hydraulically through the expanded tube 20 to form an accurate internal dimension.

Referring to Fig 4, the tube 20 is then mounted in a moulding apparatus, eg in injection moulding apparatus, and a plastics block 38 of, for example, glass filled nylon material is moulded around the outside of the tube. Threaded metal inserts are moulded into the block 38 as shown at 39, 40 to enable the connection of compressed air pipelines to the valve. One end 41 of the tube 20 can be seen in the block 38 and holes 42, 43 are formed in the block to permit end blocks (as 5 and 8 in Fig 1) to be secured to the block 38 in order to produce the finished valve body.

The locations of the inserts in the moulded block 38, as well as of the tube 20, are shown more clearly in Figure 5. The tube 20 can be seen firmly embedded in the moulded block 38 and the inserts 39, 40 can be seen to be positioned so that they are aligned with the expanded portions 31', 33' of the tube 20 between the portions 25', 26' and 27', 28' respectively. If required, once the tube 20 has been located in the moulded block 38, it may be sized accurately by pushing a plunger, for example, an accurately diametered ball, through it.

The inserts 39, 40 each has an internal thread such as 44 and a roughened exterior 45 to enhance the grip of the plastics material of the block 38 on the inserts. When moulded in situ, the inserts would have a complete base, but after moulding the inserts, the block 38 and the expanded portions 30'-34' of the tube 20 are drilled or pierced to form apertures such as aperture 46 which establish communication with the bore of the tube 20. In the five port valve illustrated three lower inserts (not shown), in addition to the two upper inserts 39, 40, would also be provided.

Referring to Fig 6, a threaded hole 47 may, alternatively, be formed directly in the plastics material in registerwith each of the expanded portions 30'-34' and holes drilled to complete the ports. To reinforce the plastics threads an annular groove 48 may be provided in the plastics body 38, a cylindrical metal insert 49 being located in the groove.

It will also be appreciated that rather than moulding a plastics or other body 38 around the tube 20 in order to provide connecting ports, it may be possible to weld connecting ports directly onto the expanded portions of tube 20 by, for example, friction welding and to use the resulting construction, as such, as a spool valve body.

The tube 20 may be made of brass rather than stainless steel or may be made of any other suitable material.

Whilst the construction of the spool valve body specifically described above represents a complete departure from conventional bodies, a conventional piston 2 may, as will be appreciated, nevertheless be used in conjunction with it.

## Claims

1. A multi-port spool valve body (1) having a generally cylindrical bore (3) extending axially therethrough for slidably receiving a piston (2), and further having a plurality of radial ports (9, 10, 11, 12, 13) communicating with said bore, characterised in that said body comprises a tubular metallic member (20) deformed to provide a plurality of spaced, radially outwardly projecting annular wall portions (30', 31', 32', 33', 34'), there being a said radial port (46) formed in each of the said annular wall portions (30', 31', 32', 33', 34').

2. A multi-port spool valve body according to claim 1 characterised in that a tube connecting member is secured to each of said annularwall portions (30', 31', 32', 33', 34') in registerwith the radial port (46) therein.

3. Amulti-port spool valve body according to claim 2 characterised in that each said tube connecting member is welded to its associated annular wall portion (30', 31', 32', 33', 34').

4. A multi-port spool valve body according to claim 2 or claim 3 characterised in that each said tube connecting member is a screw-threaded member.

5. A multi-port spool valve body according to any one of claims 1 to 4 characterised in that said deformed tubular metallic member (20) is embedded in a block (38), said block (38) being formed with fluid flow passageways (39, 40) in register with respective radial ports (46) formed in said annular wall portions (30', 31',32', 33', 34').

6. A multi-port spool valve body according to claim 5 characterised in that said block (38) comprises a plastics material moulded around said deformed tubular metallic member (20).

7. A multi-port spool valve body according to claim 5 or claim 6 characterised in that each of said fluid flow passageways (39, 40) is formed with tube connecting means.

8. A method of manufacturing a multi-port spool valve body according to claim 1 characterised in that it includes the steps of:
1. taking a metallic tubular member (20)
2. surrounding the exterior of the tubular member with a plurality of axially spaced annular collars (24, 25, 26, 27, 28, 29) adapted to restrain expansion of the tubular member (20) at the location of the collars (24,25,26,27,28,29) but to permit expansion of the tubular member (20) in a radially outward direction between the collars (24, 25, 26, 27, 28, 29)
3. filling the tubular member (20) with a fluid under a pressure sufficiently high to expand the tubular member (20) radially between the collars (24, 25, 26, 27, 28, 29)
4. releasing the pressure, and
5. forming radial ports (46) for fluid in the expanded portions (30', 31', 32', 33', 34') of the tubular member (20).

9. A method according to claim 8 characterised in that, prior to performing step 5, the expanded tubular member (20) is embedded in a block of material (38), connecting ports (39, 40) being formed in said block in alignment with the intended position of said radial ports (46) which are subsequently formed by a drilling or piercing operation via said connecting ports (39, 40).

10. A spool valve comprising a body according to any one of claims 1 to 7 and a piston located within the bore of said metallic tubular member for reciprocating movement therein.
